# EUROPEAN PATENT SPECIFICATION

(11) **EP 0 374 879 B1**
(45) Date of publication and mention of the grant of the patent: **08.03.1995**
(21) Application number: 89123545.9
(22) Date of filing: 20.12.1989
(51) Int. Cl.: C08F 6/24

(54) **Method for extraction of impurities in polymer**
Verfahren zur Extrahierung von Verunreinigungen aus einem Polymer
Méthode d'extraction d'impuretés d'un polymère

(30) Priority: 23.12.1988 JP 323424/88
(43) Date of publication of application: 27.06.1990
(73) Proprietor: TOYO ENGINEERING CORPORATION, Chiyoda-ku, Tokyo 100 (JP)
(72) Inventor: Miyakawa, Hisashi, Mobara-shi Chiba-ken (JP); Shinohara, Takanobu, Chiba-shi Chiba-ken (JP); Maeda, Tetsuo, Urayasu-shi Chiba-ken (JP)
(74) Representative: Boeters, Hans Dietrich, Dr.

(56) References cited:
- EP-A- 0 281 464
- DE-A- 3 323 940
- FR-A- 2 281 939
- FR-A- 2 314 926

## Description

### FIELD OF THE INVENTION

The present invention relates to a method for purifying a polymer.

### BACKGROUND OF THE INVENTION

As a process for removing volatile substances in a polymer, such as unreacted monomer and solvents, there are, for example, a process in which an aqueous dispersion of a polymer is subjected to stripping with air or an inert gas, and a process in which an extruder with a vent, a vacuum evaporator, or the like is used.

Of the above prior techniques, as a process for purifying a polymer by stripping its aqueous dispersion, for example, a process described in Japanese Patent Application (OPI) No. 41387/1978 can be mentioned. This process can reduce the concentration of volatile substances remaining in polystyrene to about 350 to 650 ppm, and the volatile substances still remaining in the processed polystyrene are removed using an extruder with a vent. However, although even an extruder with a vent is used, there is such a limit that at most the concentration of volatile substances remaining in the polystyrene is reduced to about 240 to 350 ppm, and it is difficult for the process to satisfy the market demand for a product that has been purified to a higher level.

### BRIEF SUMMARY OF THE INVENTION

The first object of the present invention is to provide a method for purifying efficiently a polymer.

The second object of the present invention is to provide a method for removing impurities remaining in a polymer to an extent that can meet the market demand.

The third object of the present invention is to provide a method for removing impurities to purify a polymer without damaging the basic performances of the polymer.

Other and further objects, features, and advantages of the invention will appear more fully from the following description.

### DETAILED DESCRIPTION OF THE INVENTION

The inventors have studied intensively to overcome various problems in the purification of polymers mentioned above, and have found that when a dispersion of a polymer is brought in contact with a prescribed amount of an extractant under a high pressure, the removal of volatile substances can be performed quite efficiently, and the concentration of volatile substances remaining in the dispersion containing the polymer can be reduced to a level of about 100 ppm or below, leading to the present invention.

That is, the present invention provides a method for purifying a polymer, characterized in that an extractant is brought in contact with a dispersion containing a polymer, with the weight ratio of the polymer in the dispersion to the extractant being in the range of from 1 : 20 to 1 : 400 and especially 1 : 40 to 1 : 400, thereby carrying out an extraction under a pressure of from 20 to 500 kg/cm².

The polymer dispersion to be processed by the method of the present invention may be either a homogeneous or heterogeneous dispersion of a polymer in a dispersion medium, but it preferably is a heterogeneous dispersion system containing a polymer dispersed phase in a liquid; for example a dispersion obtained from an emulsion polymerization process or from a suspension polymerization process. To be concrete, latex, coating compositions, adhesives, flocculants, processing agents, and the like, containing polystyrene, acrylonitrile/styrene copolymer, acrylonitrile/butadiene/styrene terpolymer, polymethacrylate, polyvinyl chloride, polyvinylidene chloride, styrene/butadiene, or polybutadiene can be mentioned. As a polymer, thermoplastic polymers are preferable. It is preferable to carry out the extraction process for the polymer dispersion after polymerization before preparation step of the final product.

Examples of a dispersion medium include water, aliphatic hydrocarbons (e.g., pentane and hexane), aromatic hydrocarbons (e.g., benzene and toluene), and alcohols (e.g., methanol).

In polymerization processes, dispersion medium is an indispensable material. For example, in a suspension polymerization process monomer dispersed in an aqueous phase is used for polymerization to obtain polymer in form of small particles. In the solution polymerization process for producing polypropylene, propylene as raw material is dissolved in n-hexane and mixed with catalyst, and thereafter polymerization reaction is proceeded. In the case of synthetic rubber, for example, butadiene is dissolved in toluene and mixed with dispersed catalyst for the polymerization reaction.

Polymers obtained by polymerization processes are processed by the method of the present invention to extract the volatile substances in the dispersion. Although the mechanism of extraction according to the present invention has not been made clear yet, it is presumed as follows. After polymerization, substances such as unreacted monomer remain not only in the dispersion medium but also in the polymer in an equilibrium amount. When the residual monomer in the dispersion medium is removed by extraction, the residual monomer in the polymer diffuses to the dispersion medium to establish a new equilibrium state successively, resulting the decrease of residual monomer in the polymer.

The dispersion medium is usually in a state of liquid. In case the evaporation of dispersion medium may affect to the quality of dispersion and/or polymer, for example, to the particle size of latex. The extraction condition and/or the extractant are usually selected so that the evaporation of dispersion medium is suppressed, or an additional dispersion medium is added to compensate the loss of evaporation in advance to the extraction.

The particle size of the polymer dispersion changes depending on, for example, the use of polymer, and usually is in a range of 0.01 »m to 5 mm. In the case of latex, it is in a range of 0.1 »m to 5 »m.

Although the extractant used in the present invention may be selected suitably for the dispersion containing a polymer that will be subjected to extraction, as specific examples of the extractant, (a) carbon dioxide, dinitrogen oxide, carbon disulfide, aliphatic hydrocarbons, such as ethane, ethylene, propane, butane, pentane, and hexane, halogenated hydrocarbons, aromatic hydrocarbons, such as benzene, toluene, and xylene, and alcohols, such as methanol and ethanol, and (b) a mixture of two or more of these, can be mentioned. For reference, critical constants of the mentioned typical extractants are shown in Table 1.

**Table 1**

| Critical Constants | | | |
|---|---|---|---|
| Substance | Critical Temperature Tc (°C) | Critical Pressure Pc (atm) | Boiling Point b.p. (°C) |
| Carbon dioxide | 31.1 | 73.0 | -78.5* |
| Dinitrogen oxide | 36.5 | 71.7 | -90.7 |
| Carbon disulfide | 273.0 | 76.0 | 46.3 |
| Ethane | 32.4 | 48.3 | -88.6 |
| Ethylene | 9.7 | 50.5 | -169 |
| Propane | 96.8 | 42.0 | -187.7 |
| Butane | 152.0 | 37.5 | -138.4 |
| Pentane | 196.6 | 33.3 | -129.7 |
| Hexane | 234.7 | 29.9 | -95.3 |
| Benzene | 288.5 | 47.7 | 80.1 |
| Toluene | 320.6 | 41.6 | 110.8 |
| o-Xylene | 358.4 | 36.9 | 144 |
| Methanol | 240.0 | 78.7 | 64.6 |
| Ethanol | 243.1 | 63.1 | 78.4 |

| | | | |
|---|---|---|---|
| Note: * sublimation | | | |

In the present invention, preferably the extractant is used in a supercritical state or in subcritical state, more preferably in a supercritical state. Although the pressure and temperature in the extractor may vary depending on the type of polymer dispersion to be purified and the type of extractant to be used, generally the pressure is preferably 40 ∼ 350 kg/cm². The temperature may be below or over the softening point of the polymer to be purified. If the pressure is too low, the extraction ability of the extractant for volatile substances remaining in the dispersion containing a polymer becomes low, and sometimes an adequate extraction efficiency cannot be secured. If the pressure is too high, great improvement of the extraction efficiency cannot be expected, and the cost of the pressure apparatus and the energy required for compressing the extractant increase, which is not economical.

Volatile substances that are to be extracted in the present invention are volatile impurities mentioned above, such as the unreacted monomer, solvents, and oligomers contained in the dispersion containing the polymers.

In the practice of the present invention, the extractor to be used is preferably a tank-type extractor, and, although, for example, a packed tower-type, tray tower-type, or spray tower-type extractor is suitable, there is no particular limitation if the extractor is one wherein there is good contact between the dispersion containing a polymer to be subjected to extraction and the extractant to be used. Plural extractors may be arranged in parallel to carry out the extraction continuously, or they may be arranged in series, thereby flowing the polymer dispersion and the extractant, for example, in a countercurrent manner, to effect extraction continuously. The extraction operation is carried out in the usual manner, except the above described points.

The weight ratio of the polymer in the dispersion supplied to the extractor to the extractant is 1 : 20 to 1 : 400, and preferably 1 : 50 to 1 : 300. If the ratio of the polymer to the extractant is 1 : less than 20, an adequate extraction efficiency cannot be secured, whereas if the ratio is 1 : over 400, the improvement of the extraction efficiency is less, but since the amount of extractant to be used increases, the amount of energy used, for example, for compressing the extractant, increases.

The effects of the present invention are listed below.
(1) In comparison with the prior stripping process, or the prior process that uses an extruder with a vent, or an evaporator, a dispersion containing a polymer can be purified efficiently.
(2) In order to reduce the concentration of residual volatile substances to the same degree as that of the present invention by using an extruder with a vent, it was necessary to operate for a longer time and at a higher temperature of melted resin which all affected to damage the basic properties of the polymer material. To the contrary, in the present invention the purification can be carried out without damaging the basic performances of the polymer material, such as the appearance, the color shade, and the physical properties.
(3) A polymer including a quite small amount of residual volatile substances can be obtained, which can well meet the market demand, whose restriction on the concentration of remaining volatile substances is very severe.

Now the present invention will be described in more detail with reference to Examples and a Comparative Example.

### Example 1

40g of an aqueous dispersion containing 50 wt.% of polystyrene, obtained by a usual suspension polymerization process (the concentration of volatile substances in the polystyrene being 2,300 ppm) was placed in an autoclave having a volume of 190 cm³. Carbon dioxide was supplied into the autoclave at a rate of 40 g/min, to increase the pressure in the autoclave, with the temperature being kept at 80°C. After the temperature and the pressure in the autoclave were kept at 80°C and 250 kg/cm² respectively for 2 hours, the supply of carbon dioxide was stopped. The weight ratio of the polystyrene in the aqueous dispersion supplied into the autoclave to the extractant was 1 : 265. After dehydrating, the polystyrene was analyzed, and it was found that the concentration of volatile substances was 10 ppm or less.

### Example 2

200 g of an aqueous dispersion containing 50 wt.% of acrylonitrile/styrene copolymer obtained by a usual emulsion polymerization process (the concentration of volatile substances being 5,000 ppm) was placed in an autoclave having a volume of 1 liter. Carbon dioxide was supplied into the autoclave at 20 g/min, to increase the pressure in the autoclave, with the temperature being kept at 60°C. After the temperature and the pressure in the autoclave were kept at 60°C and 250 kg/cm² respectively for 5 hours, the supply of carbon dioxide was stopped. The weight ratio of the acrylonitrile/styrene copolymer in the aqueous dispersion supplied into the autoclave to the extractant was 1 : 66. The aqueous dispersion containing the acrylonitrile/styrene copolymer in the autoclave was analyzed, and it was found that the concentration of volatile substances was 70 ppm.

### Comparative Example

The experiment was carried in the same manner as Example 1 except that the ratio of extractant was changed changed as described below.

200 g of an aqueous dispersion containing 50 wt.% of polystyrene (the concentration of volatile substances being 2,300 ppm) was placed in an autoclave. Carbon dioxide was supplied into the autoclave at 10 g/min, to increase the pressure in the autoclave, with the temperature being kept at 80°C. After the temperature and the pressure in the autoclave were kept at 80°C and 250 kg/cm² respectively for 2 hours, the supply of carbon dioxide was stopped. The weight ratio of the polystyrene in the aqueous dispersion supplied into the autoclave to the extractant was 1 : 17. After dehydrating, the polystyrene was analyzed, and it was found that the concentration of volatile substances was 500 ppm.

## Claims

1. A method for extracting of impurities in a polymer, the improvement comprising bringing an extractant in contact with a dispersion containing a polymer to be purified, with the weight ratio of the polymer in the dispersion to the extractant being in the range of from 1 : 20 to 1 : 400 under a pressure of from 20 to 500 kg/cm².

2. The method as claimed in claim 1, wherein the polymer dispersion is a homogeneous dispersion system of a polymer in a medium.

3. The method as claimed in claim 1 or 2, wherein the polymer dispersion is a heterogeneous dispersion system of a polymer in a medium.

4. The method as claimed in claim 3, wherein the heterogeneous dispersion system of a polymer is obtained from an emulsion polymerization process or a suspension polymerization process.

5. The method as claimed in any of the preceding claims, wherein the polymer is selected from polystyrene, acrylonitrile/styrene copolymer, acrylonitrile/butadien/styrene terpolymer, polymethacrylate, polyvinyl chloride, polyvinylidene chloride, styrene/butadiene, or polybutadiene.

6. The method as claimed in any of the preceding claims, wherein the extractant is selected from the group consisting of carbon dioxide, dinitrogen oxide, carbon disulfide, an aliphatic hydrocarbon, a halogenated hydrocarbon, an aromatic hydrocarbon, and a mixture made up thereof.

7. The method as claimed in any of the preceding claims, wherein the extractant is used in the supercritical state.

8. The method as claimed in any of the preceding claims. wherein the temperature in the extractor is in a range of from below to over the softening point of the polymer to be purified.

9. The method as claimed in any of the preceding claims, wherein the volatile material to be extracted is selected from unreacted monomers, solvents or oligomers.

10. The method as claimed in any of the preceding claims. wherein as the extractor a tank-type extractor is used.

11. The method as claimed in any of the preceding claims. wherein as the extractor plural extractors are arranged in parallel.

12. The method as claimed in any of claims 1 to 10, wherein as the extractor plural extractors are arranged in series.

13. The method as claimed in any of the preceding claims, wherein the weight ratio of the polymer in the dispersion to the extractant is in the range of from 1 : 50 to 1: 300.

## Patentansprüche

1. Verfahren zum Extrahieren von Verunreinigungen aus einem Polymer, wobei die Verbesserung das Inkontaktbringen eines Extraktionsmittels mit einer Dispersion, die das zu reinigende Polymer enthält, unter einem Druck von 20 bis 500 kg/cm² umfaßt und das Masseverhältnis des Polymers in der Dispersion zu dem Extraktionsmittel in dem Bereich von 1 : 20 bis 1 : 400 liegt.

2. Verfahren nach Anspruch 1, wobei die Polymerdispersion ein homogenes Dispersionssystem aus einem Polymer in einem Medium ist.

3. Verfahren nach einem der Ansprüche 1 oder 2, wobei die Polymerdispersion ein heterogenes Dispersionssystem aus einem Polymer in einem Medium ist.

4. Verfahren nach Anspruch 3, wobei das heterogene Dispersionssystem aus einem Polymer durch einen Emulsionspolymerisationsprozeß oder durch einen Suspensionspolymerisationsprozeß erhalten wird.

5. Verfahren nach einem der vorhergehenden Ansprüche, wobei das Polymer ausgewählt wird unter Polystyrol, einem Acrylnitril-Styrol-Copolymer, einem Acrylnitril-Butadien-Styrol-Terpolymer, Polymethacrylat, Polyvinylchlorid, Polyvinylidenchlorid, Styrol-Butadien oder Polybutadien.

6. Verfahren nach einem der vorhergehenden Ansprüche, wobei das Extraktionsmittel ausgewählt wird unter Kohlendioxid, Distickstoffoxid, Schwefelkohlenstoff, einem aliphatischen Kohlenwasserstoff, einem halogenierten Kohlenwasserstoff, einem aromatischen Kohlenwasserstoff und einer daraus hergestellten Mischung.

7. Verfahren nach einem der vorhergehenden Ansprüche, wobei das Extraktionsmittel in überkritischen Zustand verwendet wird.

8. Verfahren nach einem der vorhergehenden Ansprüche, wobei die Temperatur der Extraktionsvorrichtung in einem Bereich von unterhalb bis überhalb des Erweichungpunktes des zu reinigenden Polymers liegt.

9. Verfahren nach einem der vorhergehenden Ansprüche, wobei das zu extrahierende flüchtige Material ausgewählt wird unter nichtumgesetzten Monomeren, Lösungsmitteln oder Oligomeren.

10. Verfahren nach einem der vorhergehenden Ansprüche, wobei als Extraktionsvorrichtung eine Vorrichtung vom Tankextraktionstyp verwendet wird.

11. Verfahren nach einem der vorhergehenden Ansprüche, wobei als Extraktionsvorrichtung mehrere parallel angeordnete Extraktionsvorrichtungen verwendet werden.

12. Verfahren nach einem der Ansprüche 1 bis 10, wobei als Extraktionsvorrichtung mehrere Extraktionsvorrichtungen in Reihe angeordnet sind.

13. Verfahren nach einem der vorhergehenden Ansprüche, wobei das Masseverhältnis des Polymers in der Dispersion zu dem Extraktionsmittel in dem Bereich von 1 : 50 bis 1 : 300 liegt.

## Revendications

1. Procédé d'extraction d'impuretés dans un polymère, le perfectionnement consistant à acheminer un agent d'extraction au contact d'une dispersion contenant un polymère devant être purifié, le rapport en poids du polymère contenu dans la dispersion à l'agent d'extraction étant compris entre 1 : 20 et 1 : 400 sous une pression comprise entre 20 et 500 kg/cm².

2. Procédé selon la revendication 1, selon lequel la dispersion de polymère est un système de dispersion homogène d'un polymère dans un milieu de dispersion.

3. Procédé selon la revendication 1, selon lequel la dispersion de polymère est un système de dispersion hétérogène d'un polymère dans un milieu de dispersion.

4. Procédé selon la revendication 3, selon lequel le système de dispersion hétérogène d'un polymère est obtenu au moyen d'une méthode de polymérisation en émulsion ou d'une méthode de polymérisation en suspension.

5. Procédé selon l'une quelconque des revendications précédentes, selon lequel le polymère est choisi parmi les polystyrène, copolymère acrylonitrile/styrène, terpolymère acrylonitrile/butadiène/styrène, polyméthacrylate, polychlorure de vinyle, polychlorure de vinylidène, styrène/butadiène et polybutadiène.

6. Procédé selon l'une quelconque des revendications précédentes, selon lequel l'agent d'extraction est choisi dans le groupe constitué des dioxyde de carbone, oxyde nitreux, sulfure de carbone, hydrocarbure aliphatique, hydrocarbure halogéné, hydrocarbure aromatique et mélanges de ceux-ci.

7. Procédé selon l'une quelconque des revendications précédentes, selon lequel l'agent d'extraction est utilisé à l'état supercritique.

8. Procédé selon l'une quelconque des revendications précédentes, selon lequel la température régnant dans l'appareil d'extraction est comprise dans un domaine situé entre une valeur inférieure et une valeur supérieure au point de ramollissement du polymère à purifier.

9. Procédé selon l'une quelconque des revendications précédentes, selon lequel la matière volatile à extraire est choisie parmi des monomères n'ayant pas réagi, des solvents et des oligomères.

10. Procédé selon l'une quelconque des revendications précédentes, selon lequel, en tant qu'appareil d'extraction, on utilise un appareil d'extraction du type réservoir.

11. Procédé selon l'une quelconque des revendications précédentes, selon lequel, en tant qu'appareil d'extraction, on dispose en parallèle plusieurs appareils d'extraction.

12. Procédé selon l'une quelconque des revendications 1 à 10, selon lequel, en tant qu'appareil d'extraction, on dispose en série plusieurs appareils d'extraction.

13. Procédé selon l'une quelconque des revendications précédentes, selon lequel le rapport en poids du polymère contenu dans la dispersion à l'agent d'extraction est compris entre 1 : 50 et 1 : 300.
